# EUROPÄISCHE PATENTSCHRIFT

(11) **EP 1 260 262 B1**
(45) Veröffentlichungstag und Bekanntmachung des Hinweises auf die Patenterteilung: **20.08.2008**
(21) Anmeldenummer: 02008875.3
(22) Anmeldetag: 20.04.2002
(51) Int. Cl.: B01D 46/24, F01N 3/027

(54) **Heizungseinrichtung für Filterelemente eines Partikelfilters und Partikelfilter**
Heating device for filtering element of a particles filter and particles filter
Dispositif de chauffage pour élément filtrant d'un filtre à particules et filtre à particules

(30) Priorität: 22.05.2001 DE 10127223
(43) Veröffentlichungstag der Anmeldung: 27.11.2002
(73) Patentinhaber: E.G.O. ELEKTRO-GERÄTEBAU GmbH, 75038 Oberderdingen (DE)
(72) Erfinder: Seidler, Christian, 75015 Bretten (DE); Bierbaum, Achim, 74078 Heilbronn (DE); Ose, Lutz, Dr., 75447 Sternenfels (DE)
(74) Vertreter: Patentanwälte Ruff, Wilhelm, Beier, Dauster & Partner

(56) Entgegenhaltungen:
- EP-A- 0 838 578
- WO-A-94/21900
- DE-A- 3 712 333
- US-A- 4 548 625
- US-A- 4 671 058
- US-A- 5 571 298

## Beschreibung

Die Erfindung einen Partikelfilter gemäß dem Oberbegriff des Anspruchs 1.

Es sind Heizungseinrichtungen der Art bekannt, bei denen der Filter ein Rußfilter ist und aus einem Stapel von Filterscheiben besteht. Außen anliegend verlaufen axial zu dem Scheibenstapel mehrere in Umfangsrichtung verteilt angeordnete Rohrheizkörper der üblichen Art. Diese erhitzen die Filterscheibe bzw. den darauf angelagerten Ruß bis auf dessen Zündtemperatur. Dadurch kann der Ruß verbrennen und der Filter wird wieder gesäubert. Diese Anordnung weist den großen Nachteil auf, dass die benötigte Heizleistung sehr groß ist, um eine zufriedenstellende Abbrennung von Ruß zu erzielen.

Aus der WO 94/21900 A1 ist ein Filter bekannt, insbesondere ein Teichenfilter, mit einer Heizeinrichtung. Die Heizeinrichtung kann ein Rohrheizkörper ebenso wie ein elektrisches Widerstandsheizelement sein. Dabei weist der Filter eine kreisringartige Filterfläche auf, welche von der Heizeinrichtung beheizt wird zum Abbrennen von angelagerten Partikeln.

Aus der EP 838 578 A1 ist ein Partikelfilter mit konzentrischen, rohrartig ineinandersitzenden Filterflächen bekannt. Durch diese tritt jeweils Abgas hindurch, wobei Teichen aus dem Abgas herausgefiltert werden und an der Filterfläche hängen bleiben. Streifenförmige Heizeinrichtungen verlaufen zwischen den Filterflächen und dienen dazu, angelagerte Rußpartikel oder dergleichen abzubrennen zum Reinigen des Filters für eine verbesserte wiederhergestellte Filterwirkung.

Die DE 37 12 333 A1 zeigt eine Filteranordnung mit einem Widerstandsheizelement in Form von Heizdrähten gemäß der Figuren. Dabei liegen diese Heizdrähte frei bzw. sind offen und nicht isoliert und sind an Vorsprüngen odgl. an einem Filtergehäuse oder Filter wänden befestigt.

### Aufgabe und Lösung

Der Erfindung liegt die Aufgabe zugrunde, eine eingangs erwähnte Heizungseinrichtung sowie einen damit versehenen Partikelfilter zu schaffen, mit denen die Verbrennung von angelagerten Partikeln, beispielsweise Ruß, vorteilhaft und effizient sowie möglichst vollständig möglich ist.

Diese Aufgabe wird gelöst durch einen Partikelfilter mit den Merkmalen des Anspruchs 1. Weitere vorteilhafte sowie bevorzugte Ausgestaltungen der Erfindung sind in den weiteren Ansprüchen angegeben und werden im folgenden näher beschrieben. Der Wortlaut der Ansprüche wird durch ausdrückliche Bezugnahme zum Inhalt der Beschreibung gemacht.

Erfindungsgemäß weist der Partikelfilter eine Heizungseinrichtung mit einem Rohrheizkörper auf, der ein Außenrohr und wenigstens einen darin verlaufenden Heizleiter aufweist. Ein solcher Rohrheizkörper kann grundsätzlich ähnlich aufgebaut sein wie bekannte Rohrheizkörper, die auf vielen Gebieten der Technik, beispielsweise in Haushaltsbacköfen oder dergleichen, verwendet werden. Ein bevorzugtes Anwendungsgebiet für eine erfindungsgemäße Heizungseinrichtung sind Rußfilter mit scheibenförmigen und gestapelten Filterelementen. Ebenso kann die Erfindung für andere Filtertypen verwendet werden, beispielsweise mit Vorteil auch für Keramikfilter. Diese Keramikfilter können einen monolithischen Keramikwabenkörper aufweisen. Erfindungsgemäß weist der Rohrheizkörper einen geringen, insbesondere im Vergleich zu sonst üblichen Rohrheizkörpern, Durchmesser auf. Dadurch kann er in der Nähe der Filterfläche bzw. Oberfläche eines Filterelementes verlaufen.

Bei einem zuvor beschriebenen Filterscheibenstapel oder dergleichen wird es durch den geringen Durchmesser möglich, den Rohrheizkörper zwischen den Filterscheiben oder sehr nahe an der Filteroberfläche anzuordnen. Des weiteren ist der Verlauf des Rohrheizkörpers so gewählt, insbesondere durch eine entsprechende Ausbildung bzw. Biegungen, dass der Rohrheizkörper durch seinen Verlauf eine Fläche überdeckt. Der flächenüberdeckende Verlauf des Rohrheizkörpers kann beispielsweise mäanderartig sein. Weitere Möglichkeiten sind gebogene Verläufe. Durch die Kombination der geringen Entfernung zu der Filterfläche sowie des flächigen Verlaufs ist eine Abbrennung von angelagertem Ruß oder anderen Partikeln von den Filterscheiben bzw. Filterelementen sehr vorteilhaft möglich bzw. kann mit geringem Energieaufwand erreicht werden.

Unter einem geringen Durchmesser wird ein Durchmesser von weniger als 3 mm angesehen. Übliche Rohrheizkörper weisen einen Durchmesser von 6,5 mm und mehr auf. Besonders vorteilhaft kann der Rohrheizkörper noch dünner als 2 mm sein. Ein bevorzugtes Ausführungsbeispiel weist sogar einen Durchmesser von nur ca. 1,5 mm auf. Damit kann der Abstand zweier Filterelemente, zwischen denen ein solcher Rohrheizkörper angeordnet ist, im Bereich weniger Millimeter, beispielsweise 2 mm bis 4 mm, liegen. So ist eine enge Anordnung bzw. Stapelung mehrerer Filterelemente mit zwischenliegender Beheizung möglich.

Der Rohrheizkörper ist derart ausgebildet, dass er nur einen Teil einer Fläche bzw. Oberfläche eines Rußfilterelementes bedeckt. Dieser Bruchteil der Fläche kann vorzugsweise ein Viertel oder die Hälfte betragen. Eine spezielle Ausgestaltungsmöglichkeit ist ein Rohrheizkörper bzw. eine Heizungseinrichtung in Form eines Viertelkreises oder Halbkreises. Dies bedeutet, dass der Rohrheizkörper derart ausgebildet ist, dass er eine solche Fläche überdeckt bzw. beheizt, ohne dass er den Außenumrissen der Fläche genau entspricht. Dies ist besonders bei runden bzw. kreisförmigen Filterelementen von Vorteil.

Als Material kann für den Heizleiter ein chromhaltiges Material verwendet werden, beispielsweise eine Chrom-, Nickel- oder ähnliche, üblicherweise verwendete Legierung. Besonders bevorzugt wird FeCrAI. Daraus kann auch vorteilhaft das Außenrohr bestehen.

Der Durchmesser des Heizleiters kann vorteilhaft an die Abmessungen des Rohrheizkörpers sowie die elektrischen Anforderungen angepasst werden. Ein vorteilhafter Durchmesser liegt zwischen 0,2 mm und 1 mm, besonders vorteilhaft im Bereich von 0,5 mm. Des weiteren ist der Heizleiter vorzugsweise im wesentlichen gerade bzw. nicht gewendelt. Bevorzugt verläuft er geradlinig in dem Rohrheizkörper.

Besonders vorteilhaft ist es, wenn der Rohrheizkörper massearm bzw. von geringer Masse ist. Dies kann einerseits durch ein dünnes Außenrohr erreicht werden, sowohl hinsichtlich der Wandstärke als auch des Gesamtdurchmessers. Eine weitere Möglichkeit ist ein entsprechend massearmes Isoliermaterial zwischen Heizleiter und Außenrohr. Es ist besonders vorteilhaft, den Rohrheizkörper massearm auszugestalten, da zum einen eine geringere Masse auch eine schnellere Aufglüh- bzw. Aufheizzeit bedingt. Dazu können auch für die Heizungseinrichtung bzw. den Rohrheizkörper Materialien verwendet werden, die eine geringe thermische Trägheit unterstützen, also eine geringe Wärmekapazität aufweisen. Zum anderen wird dadurch eine Gewichtsersparnis erzielt. Des weiteren bedeutet ein geringer Durchmesser ein geringes Volumen und somit eine geringere Beeinträchtigung des Filtervolumens bzw. der Filterkapazität.

Der weitere Vorteil eines massearmen Rohrheizkörpers ist der, dass er bei einem Anliegen oder Anschlagen an die Oberfläche eines Filterelementes keine Zerstörungen oder dergleichen hervorruft, da die Wucht eines solchen Schlages bei geringer Masse kleiner ist. Auch ist ein leichter Rohrheizkörper gegenüber Vibrationen, wie sie beim Einsatz von Rußfiltern in Kraftfahrzeugen oder dergleichen vorkommen, weniger anfällig.

Eine Isolierung zwischen dem Heizleiter und dem Außenrohr kann ein sehr feinkörniges Pulver aufweisen. Vorteilhaft ist dieses feinkörniger als bei üblichen Rohrheizkörpern. Des weiteren kann es verdichtet werden, um eine zuverlässige Isolierung zu gewährleisten, insbesondere bei gebogenen Rohrheizkörpern. Als Material bietet sich Magnesiumoxid an.

Um den Rohrheizkörper bzw. den Heizleiter elektrisch anzuschließen, kann er mit einer Anschlussfahne verbunden bzw. verschweißt werden. Dies geschieht vorteilhaft in dem Bereich, in dem der Heizleiter aus dem Außenrohr austritt. Eine solche Anschlussfahne kann vielfältig gestaltet sein, um eine einfache und zuverlässige Anschlussmöglichkeit zu schaffen. Des weiteren kann zur Verbesserung des Anschlusses eine zusätzliche Rohrmanschette oder ein kurzes Rohr über der Verbindung des Heizleiters mit der Anschlussfahne angebracht sein. Dadurch wird die Verbindung sowohl fixiert als auch vor äußeren mechanischen Einflüssen geschützt. Innerhalb dieser Rohrmanschette bzw. einer Umhüllung der Verbindung kann eine einbettende Gussmasse als Isolation eingebracht sein. Hierfür bieten sich keramische Materialien an, die entweder auf üblichem Wege austrocknen oder noch gebrannt werden. Eine andere Möglichkeit ist Glas oder eine Glasdurchführung. Ein weiterer Vorteil einer solchen zusätzlichen Manschette oder dergleichen ist der, dass über die größere Masse und größere Fläche eine Kühlung der Heizungseinrichtung bzw. des Rohrheizkörpers in diesem Bereich erfolgen kann. Dies bietet sich beispielsweise in solchen Fällen an, in denen der Anschluss nicht in dem kühlenden Gasstrom innerhalb eines Filters angeordnet ist.

Das Außenrohr kann auch als elektrischer Rückleiter verwendet werden. Dazu kann beispielsweise der Heizleiter an einem Ende mit dem Außenrohr verschweißt sein. Dadurch lassen sich Anschlussaufwand und Fehleranfälligkeit verringern.

Ein Verfahren zur Herstellung eines solchen Rohrheizkörpers kann im wesentlichen auf bekannten Verfahren zur Fertigung bekannter Rohrheizkörper aufbauen.

Der erfindungsgemäße Partikelfilter weist mehrere stapelartig in einem Verbund angeordnete Filterelemente auf. Die Filterelemente weisen dabei Filteroberflächen auf, bei deren Durchtritt Partikel oder Ruß aus einem Gas abgeschieden wird. Mindestens einer Filterfläche ist dabei eine Heizungseinrichtung, wie sie zuvor beschrieben worden ist, zugeordnet. Diese dient dazu, an der Filteroberfläche angelagerte Partikel abzubrennen und somit das Filterelement bzw. die Filterfläche zu reinigen. Erfindungsgemäß ist vorgesehen, dass die Heizungseinrichtung in Form eines Rohrheizkörpers nicht außen am Rand einer Filteroberfläche verläuft, sondern diese teilweise bedeckt bzw. sehr nahe zu ihr verläuft. Auf diese Weise ist es möglich, die Energiezufuhr wesentlich direkter zu der Filteroberfläche herzustellen und somit beispielsweise eine Rußverbrennung zu verbessern. Dies wird durch einen vorstehend beschriebenen erfindungsgemäß sehr dünnen Rohrheizkörper möglich. Bei üblichen Rohrheizkörpern müsste für eine Anbringung zwischen den Filterelementen deren Abstand so groß gewählt werden, dass die gesamte Baugröße des Filters bei einer vorgegebenen Filterleistung zu groß wäre. Zur weiteren Verringerung des Durchmessers bzw. der Baugröße kann der Rohrheizkörper flachgepresst werden und beispielsweise einen ovalen Querschnitt aufweisen.

Ein Rohrheizkörper kann dabei so ausgebildet sein, dass er nicht die gesamte Oberfläche eines Filterelementes überdeckt. Dies könnte bei einer vorgegebenen Versorgungsspannung von 12V, beispielsweise bei Kfz, zu großen Stromstärken führen. Deswegen kann ein Rohrheizkörper vorteilhaft lediglich einen Teil eines Filterelements überdecken, beispielsweise ein Viertel oder bevorzugt die Hälfte.

Die Filterelemente in einem vorstehend beschriebenen Partikelfilter sind scheibenförmig, insbesondere können sie als Doppelscheiben mit einem Innenraum ausgebildet sein. Diese Filterelemente sind aufeinandergestapelt, wobei zwischen den Filteroberflächen ein Zwischenraum besteht. In diesem Zwischenraum bzw. zwischen jeweils zwei einander zugewandten Filterflächen ist eine erfindungsgemäße Heizungseinrichtung mit einem Rohrheizkörper angeordnet. Dieser Rohrheizkörper beheizt beide Filteroberflächen, vorzugsweise gleichmäßig.

Ein Rohrheizkörper kann als Abstandshalter für einen Filter verwendet werden. Dies bietet sich beispielsweise bei einem Filter aus mehreren Filterelementen an, auch um dessen Stabilität zu verbessern. Besonders bevorzugt ist eine solche Anwendung bei einem Stapelfilter mit mehreren Filterelementen. Es ist auch möglich, Rohrheizkörper bei entsprechender Ausbildung zur Befestigung von Filterelementen zu nutzen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auch auf anderen Gebieten möglich sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen dargestellt und werden im folgenden näher erläutert. In den Zeichnungen zeigen:
- Fig. 1: eine Draufsicht auf eine Filterscheibe mit zwei über deren Oberfläche verlaufenden erfindungsgemäßen Rohrheizkörpern,
- Fig. 2: einen Schnitt durch einen erfindungsgemäßen Filter mit gestapelten Filterscheiben und dazwischenliegenden Rohrheizkörpern und
- Fig. 3: einen Schnitt durch einen Anschluss des Rohrheizkörpers aus Fig. 1.

### Detaillierte Beschreibung der Ausführungsbeispiele

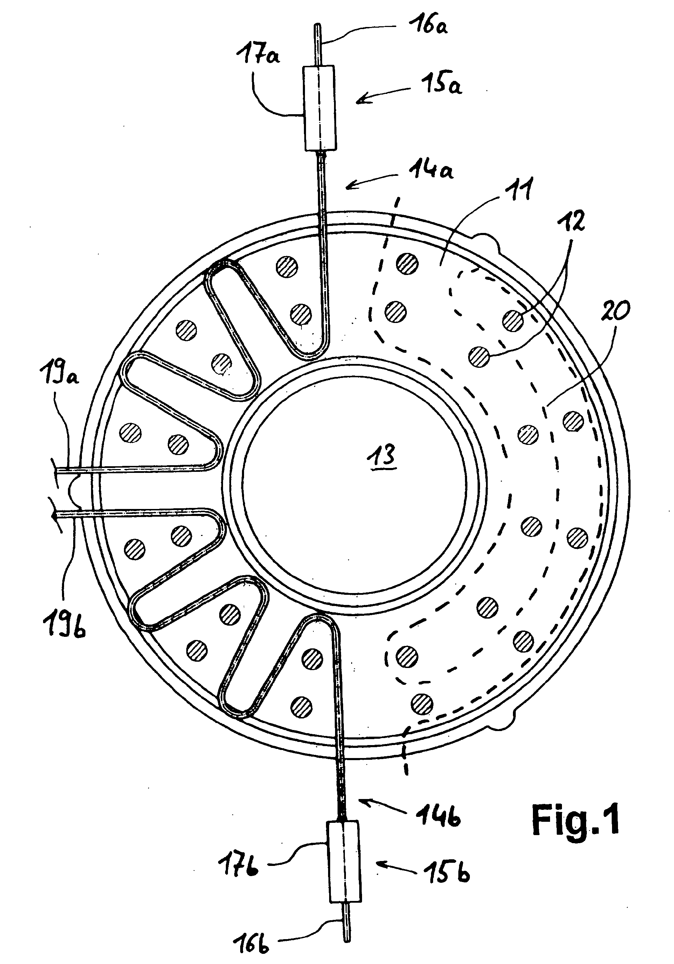

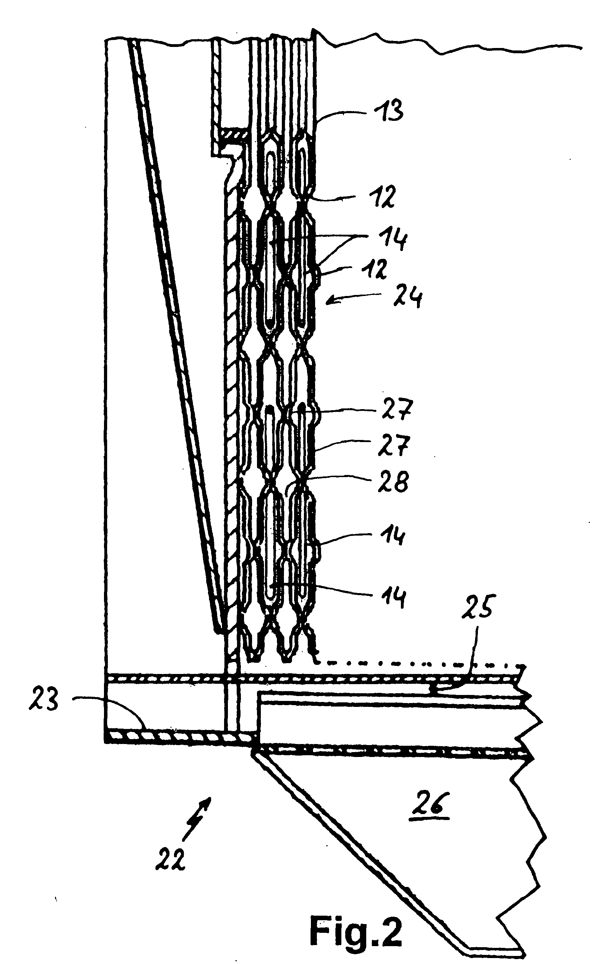

Fig. 1 zeigt eine Filterscheibe 11, die Ein- und Ausbuchtungen 12 aufweist. Knapp über der Oberfläche der Filterscheibe 11 verlaufen, wie nachfolgend auch aus der Fig. 2 deutlich wird, ein Rohrheizkörper 14a sowie 14b. Wie zu erkennen ist, verlaufen die Rohrheizkörper 14a und 14b im Bereich der Oberfläche der Filterscheibe 11 in Mäanderform. Dabei verlaufen sie um die Ein- und Ausbuchtungen 12 herum.

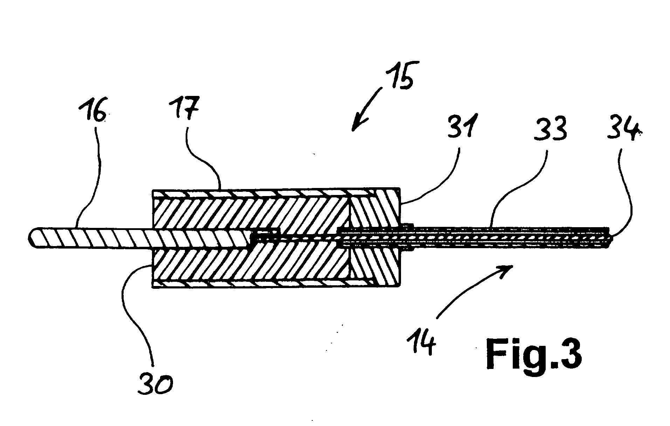

An jeweils einem freien, aus dem Bereich der Filterscheibe 11 austretenden Ende weist jeder Rohrheizkörper 14a und 14b einen Anschluss 15a und 15b auf. Dieser besteht jeweils aus einer Anschlussfahne 16a und 16b, die mit einem in dem Außenrohr des Rohrheizkörpers 14 verlau-fenden Heizleiter verbunden ist. Eine bevorzugte Verbindung ist Verschweißen. Ebenso sind mechanische Verbindungen in Form von Verquetschungen oder dergleichen möglich. Über die Verbindung zwischen Anschlussfahne 16 und Heizleiter ist eine Rohrmanschette 17a und 17b geschoben. Das Innere der Rohrmanschette 17 ist mit einer isolierenden Gussmasse ausgefüllt. Auf diese Weise wird die elektrisch leitende Verbindung zwischen Anschlussfahne 16 und Heizleiter zusätzlich mechanisch gesichert. Dieser Anschluß ist vergrößert dargestellt in Fig. 3. Er ist besonders vorteilhaft bei einer Verwendung eines Filters gemäß der Erfindung in mechanisch beanspruchten Anwendungen, beispielsweise einem PKW. Durch die zusätzliche Umhüllung bzw. mechanische Befestigung können Vibrationen abgefangen werden. Des weiteren bietet ein massereicher bzw. verstärkter und vergrößerter Anschlussbereich eines bessere thermische Kühlung des Anschlusses.

Die anderen beiden freien Enden 19a und 19b der Rohrheizkörper 14a und 14b sind ohne Anschlüsse oder dergleichen dargestellt. Dies soll dazu dienen, dem Betrachter der Fig. 1 zwei Möglichkeiten vor Augen zu führen. Einerseits können die freien Enden 19a und 19b in weitere Anschlüsse, ähnlich den Anschlüssen 15a und 15b, münden. Über diese Anschlüsse kann dann die elektrische Kontaktierung der Rohrheizkörper 14 erfolgen. In diesem Fall liegen zwei Rohrheizkörper 14 vor, die jeweils ein Viertel der Oberfläche der Filterscheibe 11 bedecken.

Alternativ können die freien Enden 19a und 19b miteinander verbunden sein, wobei dies dann im wesentlichen entsprechend den übrigen Mäandern der Rohrheizkörper im Bereich der Filterscheibe 11 erfolgt. Dann würde ein Rohrheizkörper entstehen, der die Hälfte der Oberfläche der Filterscheibe 11 bedeckt.

Der in Fig. 1 dargestellte Verlauf der Rohrheizkörper 14 ist lediglich beispielhaft zu sehen. Eine weitere Möglichkeit wäre ein teilweise konzentrischer Verlauf eines Rohrheizkörpers, wie er durch die Strichlierung 20 angedeutet ist. Zwar ist die Strichlierung 20 als einen Halbkreis der Filterscheibe 11 bedeckend dargestellt. Es ist jedoch denkbar, diese entsprechend den Rohrheizkörpern 14 jeweils Viertelkreise oder auch größere Teilkreise bedeckend auszugestalten.

Die Fig. 2 zeigt einen Schnitt durch einen erfindungsgemäßen Rußfilter 22. Der Filter weist ein Filtergehäuse 23 auf. Der gestapelte Aufbau der Filterscheiben 24 ist deutlich zu erkennen. Die Filterscheiben 24 bestehen dabei aus jeweils zwei Filterwänden 27, die zusammen eine doppelwandige Filterscheibe bilden. Die Filterscheiben 24 sind in einem umlaufenden Filterraum 25 angeordnet und im Bereich des zentralen Abluftkanals 13 miteinander verbunden sowie in dem Rußfilter 22 befestigt. Der Filterraum 25 ist dabei mit einem Innenraum 28 in den Filterscheiben 24 über den Weg durch die Filterwände 27 gasdurchlässig verbunden.

Zwischen zwei Filterscheiben 24 verlaufen Rohrheizkörper 14 entsprechend Fig. 1. Dabei ist bei der Darstellung in der Fig. 2 pro Zwischenraum zwischen zwei Filterscheiben 24 ein Rohrheizkörper 14 vorgesehen. Es ist zu erkennen, wie die Rohrheizkörper 14 mit gleichem Abstand zu den Filterwänden 27 bzw. in deren Mitte verlaufen. Dadurch kann eine gleichmäßige Beheizung der Filterwände bzw. ein gleichmäßiges Abbrennen von Ruß erfolgen. Der Übersichtlichkeit halber sind elektrische Anschlüsse der Rohrheizkörper 14 nicht dargestellt. Diese können jedoch im wesentlichen gemäß der Fig. 1 ausgestaltet sein.

Des weiteren ist erkennbar, wie die Rohrheizkörper 14 leicht als Abstandshalter für die Filterscheiben 24 verwendet werden könnten. Dazu kann zum einen der Abstand der Filterscheiben reduziert werden. Alternativ können an den Filterelementen Ausbuchtungen oder Vorsprünge vorgesehen sein, an denen ein Rohrheizkörper verläuft. Schließlich kann ein Rohrheizkörper in der Ansicht gemäß Fig. 2 leicht wellig verlaufen um den Abstand einzuhalten.

Selbstverständlich ist es möglich und auch von Vorteil, für die Filterwand 27 ganz links in der Fig. 2 eine entsprechende Beheizung mit einem Rohrheizkörper vorzusehen. Dies ist jedoch aus Gründen der Übersichtlichkeit weggelassen worden. Für den Fachmann ist es selbstverständlich. Im übrigen ist anzumerken, dass die Darstellung gemäß Fig. 2 beispielhaft bzw. schematisch zu bewerten ist. An ihr soll lediglich verdeutlicht werden, wie ein Rußfilter mit einem Filterscheibenstapel aufgebaut sein kann und wie gemäß einer beispielhaften Möglichkeit Rohrheizkörper dazwischen verlaufen können.

Unterhalb des Rußfilters 22 bzw. nach oben, zu dem Filterraum 25 hin offen, ist ein Aschesammler 26 angebracht. Darin kann die Asche des von den Filterwänden 27 verbrannten Rußes gesammelt werden.

Bevorzugt sind die elektrischen Anschlüsse für die Rohrheizkörper 14 außerhalb des Filtergehäuses 23 vorgesehen. Dadurch sind sie der aggressiven Abgas-Atmosphäre nicht ausgesetzt. Des weiteren wird in dem Filter selber kein wertvoller Raum für die Anschlüsse verschwendet.

In Fig. 3 ist zu erkennen, wie der Anschluß 15 im Detail aufgebaut ist. Außenrohr 33 und Heizleiter 34 münden in einen Flanschnippel 31. Dieser ist aus isolierendem Material, vorzugsweise Kunststoff oder Keramik. Der Heizleiter 34 verläuft weiter als das Außenrohr 33 und liegt an einer Abstufung der Anschlussfahne 16 an. Dort ist er befestigt, beispielsweise durch Verschweißen oder eine mechanische Verbindung. An den Flanschnippel 31 wird über einen passenden Absatz die Rohrmanschette 17 gesteckt. Sie kann geklemmt werden oder zusätzlich befestigt werden. Die Rohrmanschette wird mit einer isolierenden Gussmasse 30 ausgegossen. Hierfür bietet sich wieder ein passender Werkstoff an, beispielsweise eine Keramik oder ähnliche isolierende Gussmassen.

Zwischen dem Außenrohr 33 und dem Heizleiter 34 befindet sich das feinkörnige Isoliermaterial. Aus Gründen der Übersichtlichkeit ist es nicht dargestellt. Die Gussmasse 30 kann dazu dienen, ein Austreten dieses Isoliermaterials zu verhindern sowie die Befestigung von Rohrmanschette 17, Flanschnippel 31, Außenrohr 33 und Heizleiter 34 zu sichern. Die Rohrmanschette 17 selber kann aus Metall bestehen, da sie durch die Gussmasse 30 gegen den Heizleiter 34 isoliert ist.

### Funktion

Ein Rohrheizkörper bei dem erfindungsgemäßen Partikelfilter kann elektrisch einzeln betrieben werden. Des weiteren ist es möglich, mehrere der Rohrheizkörper in einem Partikelfilter in Intervallen, teilweise auch zusammengeschaltet, zu betreiben. Dieser Betrieb sollte so ausgestaltet sein, dass die Filteroberflächen von Filterelementen ausreichend oft von Partikeln oder Ruß abgebrannt werden. Andererseits sollte die insgesamt benötigte Stromstärke bei einem Einsatz in Kraftfahrzeugen aufgrund der Maximalstrombelastung des Bordnetzes unter einem gewissen Wert bleiben. Aus diesen Kriterien heraus lässt sich vorteilhaft ein Steuerverfahren definieren.

Die Befestigung bzw. Anbringung von Rohrheizkörpern an einem Filter bzw. zwischen mehreren Filterelementen eines Filters kann auf einfache Art und Weise durch Einlegen der Rohrheizkörper erfolgen. Des weiteren ist eine mechanische Halterung bzw. Fixierung der Rohrheizkörper durch deren zwangsläufige elektrische Kontaktierung möglich. Darüber hinaus stellt es kein Problem dar, wenn der Rohrheizkörper ganz oder teilweise an dem Filterelement anliegt. Es ist auch möglich, eine Befestigung des Heizkörpers durch abwechselndes Anliegen zwischen zwei Filterflächen zu erzielen. Durch eine geringe Masse der Rohrheizkörper entsteht auch bei Schlägen oder Vibrationen keine Beschädigung der Filteroberfläche.

Aufgrund der elektrischen Isolierung zwischen dem Heizleiter des Rohrheizkörpers und dem Außenrohr wegen des enthaltenen Isoliermaterials werden keine zusätzlichen Isolierungen benötigt. Des weiteren kann das Außenrohr bevorzugt aus FeCrAI bestehen, welches an der Oberfläche Aluminiumoxid bildet. Dieses ist zum einen isolierend und zum anderen schützt es den Rohrheizkörper gegen eine aggressive Atmosphäre, wie sie in einem Ruß- oder sonstigen Filter herrscht.

Wird ein erfindungsgemäßer Rohrheizkörper in einem Rußfilter für ein Kraftfahrzeug eingesetzt, so liegt die Versorgungsspannung typischerweise bei 12 V. Aufgrund dieser geringen Spannung kann ein geringer Isolierabstand zwischen Heizleiter und Außenrohr gewählt werden. Damit ist eine sehr dünne Ausführung der Rohrheizkörper möglich, wodurch ein sehr großer Vorteil der vorliegenden Erfindung erreicht wird.

Gemäß einem Ausführungsbeispiel der vorliegenden Erfindung kann eine Heizungseinrichtung für Filterelemente eines Rußfilters sowie ein Rußfilter geschaffen werden. Bei diesem Rußfilter sind die Filterelemente scheibenförmig und aufeinander gestapelt. Die Heizungseinrichtung weist einen Rohrheizkörper mit einem Außenrohr und einem darin verlaufenden Heizleiter auf. Das besondere an der Erfindung ist ein sehr geringer Durchmesser des Rohrheizkörpers im Vergleich zu üblichen Rohrheizkörpern. Des weiteren ist er derart ausgebildet, dass er in seinem Verlauf eine gewisse Fläche überdeckt. Die Anordnung des Rohrheizkörpers in dem Rußfilter ist derart, dass er nahe an der Filteroberfläche der Filterelemente verläuft.

## Patentansprüche

1. Partikelfilter (22) mit mehreren Filterelementen (11, 24), die im wesentlichen stapelartig in einem Verbund angeordnet sind, wobei die Filterelemente Filteroberflächen (27) aufweisen und mindestens einer Filteroberfläche eine Heizungseinrichtung (14) zum Abbrennen von angelagerten Partikeln zugeordnet ist, die Heizungseinrichtung wenigstens einen Rohrheizkörper (14) mit einem Außenrohr (33) und wenigstens einem Heizleiter (34) aufweist, wobei der Rohrheizkörper einen geringen Durchmesser aufweist und derart ausgebildet ist, dass er nahe an der Filterfläche (27) eines Filterelements (11, 24) verläuft und durch seinen Verlauf eine Fläche überdeckt **dadurch gekennzeichnet, dass** die Heizungseinrichtung sehr nah an der Filteroberfläche verläuft und ein Rohrheizkörper (14) einen Teil eines Filterelements (11, 24) überdeckt.

2. Partikelfilter nach Anspruch 1, **dadurch gekennzeichnet, dass** ein Rohrheizkörper (14) ein Viertel oder die Hälfte eines Filterelements (11, 24) überdeckt.

3. Partikelfilter nach Anspruch 1 oder 2, **dadurch gekennzeichnet, dass** der Rohrheizkörper (14) einen Durchmesser von weniger als 3 mm, vorzugsweise weniger als 2 mm, aufweist.

4. Partikelfilter nach Anspruch 1, 2 oder 3, **dadurch gekennzeichnet, dass** der Rohrheizkörper (14) in mäanderartiger Form verläuft und **dadurch** eine Fläche überdeckt.

5. Partikelfilter nach einem der vorhergehenden Ansprüche, **dadurch gekennzeichnet, dass** der Rohrheizkörper (14) derart ausgebildet ist, dass er ein Viertel oder die Hälfte der Fläche eines Partikelfilterelements (11, 24) bedeckt, wobei er vorzugsweise einen Viertelkreis oder einen Halbkreis überdeckt.

6. Partikelfilter nach einem der vorhergehenden Ansprüche, **dadurch gekennzeichnet, dass** das Material des Heizleiters (34) Chrom enthält, insbesondere FeCrAI ist, wobei vorzugsweise der Durchmesser des Heizleiters zwischen 0,2 mm und 1 mm beträgt.

7. Partikelfilter nach einem der vorhergehenden Ansprüche, **dadurch gekennzeichnet, dass** der Heizleiter (34) ungewendelt ist, wobei er vorzugsweise geradlinig in dem Außenrohr (33) des Rohrheizkörpers (14) verläuft.

8. Partikelfilter nach einem der vorhergehenden Ansprüche, **dadurch gekennzeichnet, dass** der Rohrheizkörper (14) massearm ist, wobei er vorzugsweise ein dünnes und massearmes Außenrohr (33) aufweist.

9. Partikelfilter nach einem der vorhergehenden Ansprüche, **dadurch gekennzeichnet, dass** eine Isolierung zwischen dem Heizleiter (34) und dem Außenrohr (33) ein sehr feinkörniges Pulver aufweist, vorzugsweise Magnesiumoxid, wobei es insbesondere verdichtet ist.

10. Partikelfilter nach einem der vorhergehenden Ansprüche, **dadurch gekennzeichnet, dass** als Anschlussverbindung im Bereich des Austritts des Heizleiters (34) aus dem Außenrohr (33) eine Anschlussfahne (16) vorgesehen ist, die mit dem Heizleiter (34) verbunden ist, vorzugsweise verschweißt ist.

11. Partikelfilter nach Anspruch 10, **dadurch gekennzeichnet, dass** eine zusätzliche Rohrmanschette (17) über der Verbindung von Heizleiter (34) und Anschlussfahne (16) angeordnet ist, wobei vorzugsweise die Rohrmanschette eine Einbettung aus isolierender Gussmasse (30), insbesondere keramischer Gussmasse, aufweist.

12. Partikelfilter nach Anspruch 1 oder 2, **dadurch gekennzeichnet, dass** die Filterelemente (11, 24) scheibenförmig sind, insbesondere als Doppelscheiben mit einem Innenraum (28) ausgebildet sind, wobei die Filterelemente aufeinander gestapelt sind und jeweils zwei einander zugewandten Filterflächen (27) eine gemeinsame und dazwischen angeordnete Heizungseinrichtung (14) zugeordnet ist.

## Claims

1. Particle filter (22) having several filter elements (11, 24) arranged in essentially stack-like manner in a union, the filter elements having filter surfaces (27) and with at least one filter surface is associated a heating device (14) for burning off deposited particles, the heating device having at least one tubular heater (14) with an outer tube (33) and at least one heating conductor (34), the tubular heater having a small diameter and being so constructed that it runs close to the filter surface (27) of a filter element (11, 24) and through its path covers an area, **characterized in that** the heating device runs very close to the filter surface and a tubular heater (14) covers part of a filter element (11, 24).

2. Particle filter according to claim 1, **characterized in that** a tubular heater (14) covers a quarter or half of a filter element (11, 24).

3. Particle filter according to claim 1 or 2, **characterized in that** the tubular heater (14) has a diameter of less than 3 mm, preferably less than 2 mm.

4. Particle filter according to claim 1, 2 or 3, **characterized in that** the tubular heater (14) has a meander-like path and consequently covers an area.

5. Particle filter according to one of the preceding claims, **characterized in that** the tubular heater (14) is constructed in such a way that it covers a quarter or half the area of a particle filter element (11, 24) and preferably covers a quadrant or a semicircle.

6. Particle filter according to one of the preceding claims, **characterized in that** the material of the heating conductor (34) contains chromium and is in particular FeCrA1 and preferably the heating conductor diameter is between 0.2 and 1 mm.

7. Particle filter according to one of the preceding claims, **characterized in that** the heating conductor (34) is uncoiled and it passes preferably in linear manner in the outer tube (33) of the tubular heater (14).

8. Particle filter according to one of the preceding claims, **characterized in that** the tubular heater (14) is of a low mass nature and preferably has a thin, low-mass outer tube (33).

9. Particle filter according to one of the preceding claims, **characterized in that** an insulation between the heating conductor (34) and outer tube (33) has a very fine-grain powder, preferably magnesium oxide and it is more particularly compacted.

10. Particle filter according to one of the preceding claims, **characterized in that** the connection in the area where the heating conductor (34) passes out of the outer tube (33) is constituted by a connecting lug (16), which is connected, preferably welded to the heating conductor (34).

11. Particle filter according to claim 10, **characterized in that** an additional tubular sleeve (17) is placed over the connection between the heating conductor (34) and connecting lug (16) and preferably the tubular sleeve has an embedding of insulating, pourable compound (30), particularly ceramic, pourable compound.

12. Particle filter according to claim 1 or 2, **characterized in that** the filter elements (11, 24) are disk-shaped and are in particular constructed as double disks with an inner area (28), the filter elements being stacked on one another and with in each case two facing filter areas (27) is associated a common, interposed heating device (14).

## Revendications

1. Filtre à particules (22) avec plusieurs éléments de filtre (11, 24), qui sont disposés de manière essentiellement empilée et raccordée, sachant que les éléments de filtre présentent des surfaces de filtre (27) dans un assemblage et qu'un dispositif de chauffe (14) est associé à au moins une surface de filtre pour brûler des particules qui y sont déposées, que le dispositif de chauffe présente au moins un radiateur tubulaire (14) avec un tuyau extérieur (33) et au moins un conducteur chauffant (34), sachant que le radiateur tubulaire présente un diamètre de faible valeur et qu'il est réalisé de façon qu'il s'étend à proximité de la surface de filtre (27) d'un élément de filtre (11, 24) et que par son cours il recouvre une surface, **caractérisé en ce que** le dispositif de chauffe s'étend à proximité immédiate de la surface de filtre et qu'un radiateur tubulaire (14) recouvre une partie d'un élément de filtre (11, 24).

2. Filtre à particules d'après la revendication 1, **caractérisé en ce qu'**un radiateur tubulaire (14) recouvre un quart ou la moitié d'un élément de filtre (11, 24).

3. Filtre à particules d'après la revendication 1 ou 2, **caractérisé en ce que** le radiateur tubulaire (14) présente un diamètre inférieur à 3 mm et de préférence inférieur à 2 mm.

4. Filtre à particules d'après la revendication 1, 2 ou 3, **caractérisé en ce que** le radiateur tubulaire (14) s'étend en décrivant des méandres et qu'il recouvre ainsi une surface.

5. Filtre à particules d'après une des revendications précédentes, **caractérisé en ce que** le radiateur tubulaire (14) est réalisé de manière à couvrir un quart ou la moitié de la surface d'un élément de filtre à particules (11, 24), sachant qu'il recouvre de préférence un quart de cercle ou un demi-cercle.

6. Filtre à particules d'après une des revendications précédentes, **caractérisé en ce que** le matériau du conducteur chauffant (34) contient du chrome et qu'il est notamment composé de FeCrAl, sachant que de préférence le diamètre du conducteur chauffant comporte une valeur entre 0,2 mm et 1 mm.

7. Filtre à particules d'après une des revendications précédentes, **caractérisé en ce que** le conducteur chauffant (34) n'est pas boudiné, sachant qu'il s'étend de préférence de façon rectiligne dans le tuyau extérieur (33) du radiateur chauffant (14).

8. Filtre à particules d'après une des revendications précédentes, **caractérisé en ce que** le radiateur tubulaire (14) est de faible masse, sachant qu'il présente de préférence un tuyau extérieur (33) mince et de faible masse.

9. Filtre à particules d'après une des revendications précédentes, **caractérisé en ce qu'**un isolement entre le conducteur chauffant (34) et le tuyau extérieur (33) présente une poudre à grain très fin, de préférence de l'oxyde de magnésium, sachant que celui-ci est notamment compacté.

10. Filtre à particules d'après une des revendications précédentes, **caractérisé en ce que** dans la zone où le conducteur chauffant (34) sort du tuyau extérieur (33) on prévoit en tant que raccordement de connexion une languette de connexion (16), qui est raccordée et préférablement soudée au conducteur chauffant (34).

11. Filtre à particules d'après la revendication 10, **caractérisé en ce qu'**on dispose une manchette (17) additionnelle par-dessus le raccordement entre le conducteur chauffant (34) et la languette de connexion (16), sachant que de préférence la manchette présente une inclusion d'un matériau de remplissage (30) isolant, notamment d'un matériau céramique de remplissage.

12. Filtre à particules d'après la revendication 1 ou 2, **caractérisé en ce que** les éléments de filtre (11, 24) ont une forme de disque, en étant notamment réalisés sous forme de disque double avec un espace intérieur (28), sachant que les éléments de filtre sont empilés les uns sur les autres et qu'on associe respectivement à deux surfaces de filtre (27) orientées l'une vers l'autre un dispositif de chauffe (14) collectif situé entre les deux.
